# EUROPÄISCHE PATENTSCHRIFT

(11) **EP 0 729 863 B1**
(45) Veröffentlichungstag und Bekanntmachung des Hinweises auf die Patenterteilung: **04.11.1998**
(21) Anmeldenummer: 96102951.9
(22) Anmeldetag: 01.03.1996
(51) Int. Cl.: B60P 3/14

(54) **Möbel für Fahrzeugeinrichtungen**
Furniture for the equipment of a vehicle
Meuble pour l'équipement d'un véhicule

(30) Priorität: 03.03.1995 DE 29503599 U
(43) Veröffentlichungstag der Anmeldung: 04.09.1996
(73) Patentinhaber: Herbert Zippel Moosbach, Inh. Peter Dinzl, D-92709 Moosbach (DE)
(72) Erfinder: Dinzl, Peter, 91583 Schillingsfürst (DE)
(74) Vertreter: Lorenz, Werner, Dipl.-Ing.

(56) Entgegenhaltungen:
- DE-A- 2 741 126
- FR-A- 2 636 281
- REVUE TECHNIQUE DIESEL, Nr. 178, November 1992 - Dezember 1992, BILLANCOURT, Seite 27 XP000350827 "Modul-System"

## Beschreibung

Die Erfindung betrifft ein Möbel für Fahrzeugeinrichtungen, mit Schubladen, Koffereinsätzen, Türen, Rolladen, Regalen, Aufsätzen und dergleichen Elementen, und mit einem Rahmen oder einem Gehäuse, in welches die Schubladen, Koffereinsätze, Türen, Rolladen, Regale, Aufsätze und dergleichen Elemente eingesetzt sind.

Derartige Möbel sind aus der Praxis bekannt und werden insbesondere in Servicefahrzeuge eingebaut, um platzsparend und übersichtlich Werkzeuge und/oder Bauteile zu lagern und somit einen schnellen Zugriff auf die jeweiligen Bauteile bzw. Werkzeuge zu ermöglichen.

Üblicherweise wird der Rahmen oder das Gehäuse, in welches die Elemente eingesetzt sind, aus einem gekanteten Stahlblech hergestellt, was einerseits zu einer hohen Stabilität des Gehäuses bzw. des Rahmens führt, so daß auch das gesamte Möbel verhältnismäßig steif ausgeführt ist, andererseits jedoch den Nachteil mit sich bringt, daß das Möbel aufgrund der verhältnismäßig hohen Dichte von Stahl ein relativ hohes Eigengewicht aufweist. Dieses hohe Eigengewicht führt dazu, daß eine entsprechend geringere Zuladung in das Fahrzeug möglich ist, da das Maximalgewicht des Fahrzeuges nicht überschritten werden darf.

Ein weiterer Nachteil von Stahlblech ist die verhältnismäßig aufwendige Bearbeitung desselben, da dieses zuerst in geeigneten Umformvorgängen auf seine vorgesehene Form gebracht werden und anschließend mit einem vor Korrosion schützenden Werkstoff oder einer Lackierung geschützt werden muß, um eine saubere Optik und eine entsprechend lange Lebensdauer des Rahmens oder des Gehäuses zu gewährleisten.

Der vorliegenden Erfindung liegt daher die Aufgabe zugrunde, ein Möbel für Fahrzeugeinrichtungen vorzusehen, das ein verhältnismäßig geringes Eigengewicht aufweist und eine höhere Zuladung in das Fahrzeug ermöglicht.

Erfindungsgemäß wird diese Aufgabe dadurch gelöst, daß der Rahmen oder das Gehäuse aus stranggepreßten Leichtmetallprofilen gebildet ist, wobei in die Zwischenräume zwischen den Leichtmetallprofilen wenigstens teilweise Verkleidungsglieder eingesetzt sind.

Durch das Vorsehen von stranggepreßten Leichtmetallprofilen läßt sich gegenüber vergleichbaren Profilen bzw. Anordnungen aus Stahlblech eine Gewichtseinsparung von ca. 30 % erreichen, so daß auch eine entsprechend höhere Zuladung im Fahrzeug möglich ist und somit auch mehr Werkzeuge oder Bauteile im Fahrzeug mitgeführt werden können.

Desweiteren ergibt sich der Vorteil, daß die Leichtmetallprofile in einem Strangpreßverfahren auf einfache Art und Weise hergestellt werden können, wobei eine aufwendige Nachbearbeitung des Strangpreßprofiles im Gegensatz zur Verwendung von Stahlblech nicht notwendig ist. Vielmehr müssen die stranggepreßten Leichtmetallprofile nur noch auf die benötigte Länge zugesägt werden, was mittels einfacher Trennwerkzeuge erfolgen kann.

In die Zwischenräume zwischen den Leichtmetallprofilen sind wenigstens teilweise Verkleidungsglieder eingesetzt, um somit zu vermeiden, daß Staub oder Schmutz in das Innere des Gehäuses eindringen und somit das Werkzeug und/oder die Bauteile, die in dem Möbel gelagert sind, beeinträchtigen können. Desweiteren kann mittels der Verkleidungsglieder ein Sichtschutz realisiert werden, so daß für unbefugte Personen nicht sofort erkennbar ist, welche Werkzeuge und/oder Bauteile in dem Möbel gelagert sind.

In einer vorteilhaften Ausführungsform der Erfindung kann vorgesehen sein, daß die stranggepreßten Leichtmetallprofile aus Aluminium oder einer Aluminiumlegierung gefertigt sind.

Aluminium oder Aluminiumlegierungen können auf einfache Art und Weise stranggepreßt werden, wobei unterschiedlichste Profilformen möglich sind. Desweiteren ergibt sich durch die Verwendung von Aluminium oder Aluminiumlegierungen der Vorteil, daß eine Nachbehandlung der stranggepreßten Leichtmetallprofile zum Schutz vor Korrosion überflüssig ist, da Aluminium bzw. Aluminiumlegierungen im üblichen Gebrauch weitgehend korrosionsbeständig sind.

Sollte jedoch ein zusätzlicher Korrosionsschutz notwendig sein, so kann dieser auf einfache Weise durch Eloxieren der Profile aus Aluminium oder einer Aluminiumlegierung erfolgen.

In einfacher Weise können die Verkleidungsglieder als Bleche und/oder Kunststoffplatten ausgeführt sein.

Sowohl Bleche als auch Kunststoffplatten können auf einfache Art und Weise hergestellt und auf das gewünschte Maß zugeschnitten oder gestanzt werden, so daß die Fertigungskosten für das erfindungsgemäße Möbel relativ gering sind.

Desweiteren können die als Bleche und/oder Kunststoffplatten ausgebildeten Verkleidungsglieder auf einfache Art und Weise auf nahezu beliebige geometrische Formen gebracht werden, so daß es möglich ist, derartig ausgebildete Verkleidungsglieder auch bei komplizierten geometrischen Rahmenformen einzusetzen.

Die Befestigung der Verkleidungsglieder kann vorteilhafterweise in Aussparungen und/oder Nuten in den Leichtmetallprofilen erfolgen, in welche die Verkleidungsglieder eingesetzt sind, so daß hierdurch eine formschlüssige und stabile Verbindung mit dem Rahmen oder dem Gehäuse gegeben ist. Falls notwendig können die Verkleidungsglieder in den Aussparungen und/oder Nuten zusätzlich noch mittels eines Fügeverfahrens, wie beispielsweise Kleben, befestigt werden. Es ist selbstverständlich auch möglich, die Verkleidungsglieder auch mittels Schraub- oder Nietverbindungen noch zusätzlich fest mit den Aussparungen und/oder Nuten zu verbinden.

Desweiteren kann auch vorgesehen sein, daß die Verkleidungsglieder außenseitig auf den Leichtmetallprofilen angebracht sind.

Die Verkleidungsglieder können hierbei mittels Schraub- und/oder Nietverbindungen auf den Leichtmetallprofilen angebracht sein, genauso wie es auch möglich ist, die Verkleidungsglieder mit Kulissensteinen zu verbinden, welche in den Aussparungen und/oder Nuten in den Leichtmetallprofilen vorgesehen sind.

Die Aussparungen und/oder Nuten verlaufen vorteilhafterweise in Längsrichtung der einzelnen Leichtmetallprofile, so daß über die gesamte Länge der Leichtmetallprofile die Möglichkeit besteht, beispielsweise die Verkleidungsglieder einzusetzen.

Da die stranggepreßten Leichtmetallprofile in Längen von beispielsweise mehreren Metern angeliefert werden, steht somit auch nach dem Trennen bzw. Absägen der einzelnen Leichtmetallprofile auf die jeweils benötigte Länge immer eine geeignete Aussparung und/oder Nut zur Verfügung.

Die Leichtmetallprofile können außerdem eine wenigstens annähernd rechteckförmige Querschnittsfläche aufweisen, wobei die Aussparungen und/oder Nuten auf allen vier Längsseiten der Leichtmetallprofile vorgesehen sind.

Durch die wenigstens annähernd rechteckförmige Querschnittsfläche der Leichtmetallprofile weisen diese eine gute mechanische Festigkeit, beispielsweise bei einer Beanspruchung auf Biegung, auf und ermöglichen aufgrund der auftretenden Symmetrie eine einfache Handhabung bei der Montage des erfindungsgemäßen Möbels. Da außerdem auf allen vier Längsseiten der Leichtmetallprofile die Aussparungen und/oder Nuten vorgesehen sind, können die Leichtmetallprofile entsprechend problemlos eingebaut und zusammengesetzt werden, da das Montagepersonal nicht auf bestimmte Einbaulagen der Leichtmetallprofile achten muß, sondern diese in beliebiger Lage aneinandergefügt werden können.

Die Leichtmetallprofile können mittels Verbindungseinrichtungen an ihren Stirnseiten und/oder ihren Längsseiten miteinander verbindbar sein.

Somit können die Leichtmetallprofile beispielsweise stumpf aneinandergestoßen und miteinander verbunden werden, wodurch auf einfache Art und Weise nahezu beliebige Formen des Gehäuses bzw. Rahmens des Möbels realisierbar sind.

Die Verbindungseinrichtungen können in vorteilhafter Weise als Kulissensteine ausgeführt sein, welche in die Aussparungen und/oder Nuten in den Leichtmetallprofilen eingesetzt und in diesen verschiebbar sind.

Das Einsetzen der Verbindungseinrichtungen in die Aussparungen und/oder Nuten kann von den Stirnseiten der Leichtmetallprofile aus erfolgen oder aber, falls die Stirnseiten des Leichtmetallprofiles beispielsweise in montiertem Zustand nicht mehr zugänglich sind, über in den Leichtmetallprofilen vorgesehene Öffnungen, die z.B. in die Leichtmetallprofile eingefräst sind.

Die Befestigung der Schubladen, Koffereinsätze, Türen, Rolladen, Regale, Aufsätze und dergleichen Elemente in oder an dem erfindungsgemäßen Möbel kann mittels Aufnahmeeinrichtungen erfolgen, in welchen die Elemente gehalten sind, wobei die Aufnahmeeinrichtungen an den Leichtmetallprofilen angebracht sind.

Die Befestigung der Aufnahmeeinrichtungen, welche beispielsweise als Schienen ausgebildet sind, kann z.B. mittels der bereits erwähnten Kulissensteine erfolgen.

Nachfolgend sind anhand der Zeichnung mehrere Ausführungsbeispiele der vorliegenden Erfindung prinzipmäßig beschrieben.

Es zeigt:
- Fig. 1: ein erstes Ausführungsbeispiel der vorliegenden Erfindung,
- Fig. 2: ein zweites Ausführungsbeispiel der vorliegenden Erfindung,
- Fig. 3: ein drittes Ausführungsbeispiel der vorliegenden Erfindung,
- Fig. 4: schematisch eine Querverbindung zweier Leichtmetallprofile, und
- Fig. 5: eine Verbindung von vier Leichtmetallprofilen.

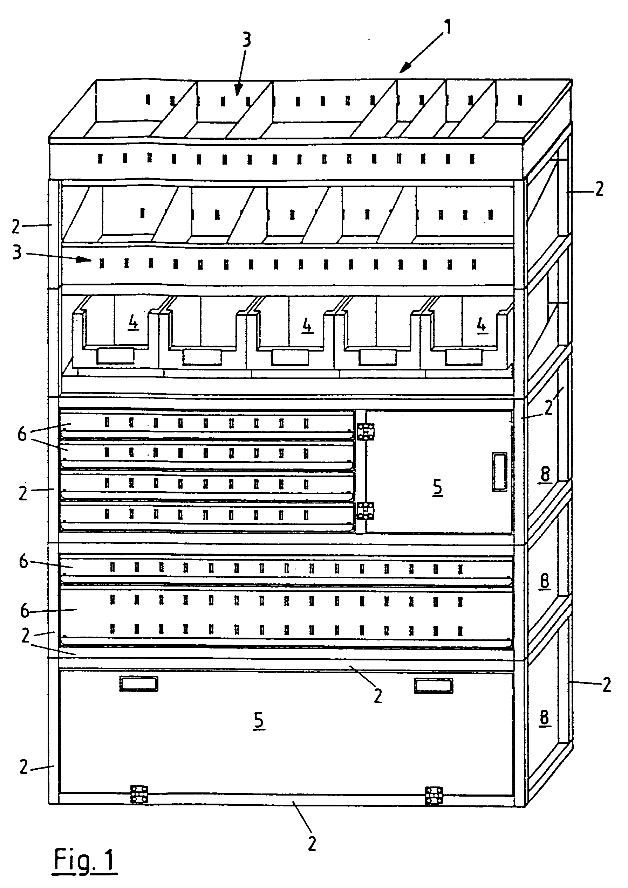

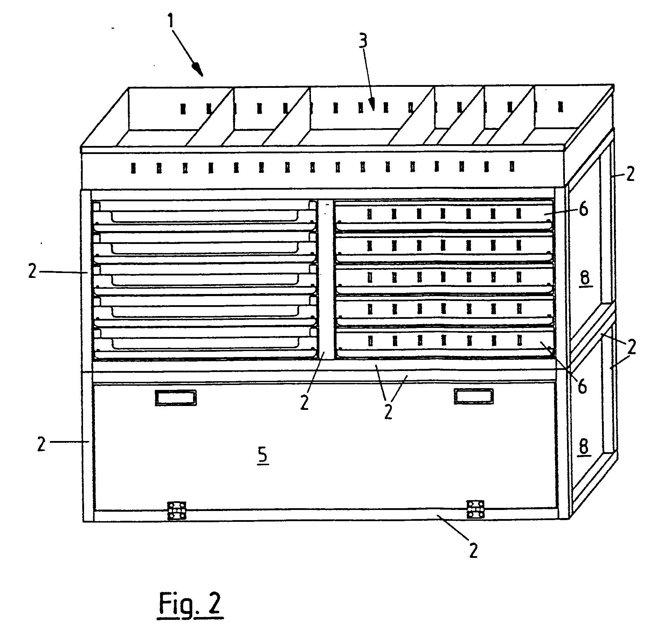

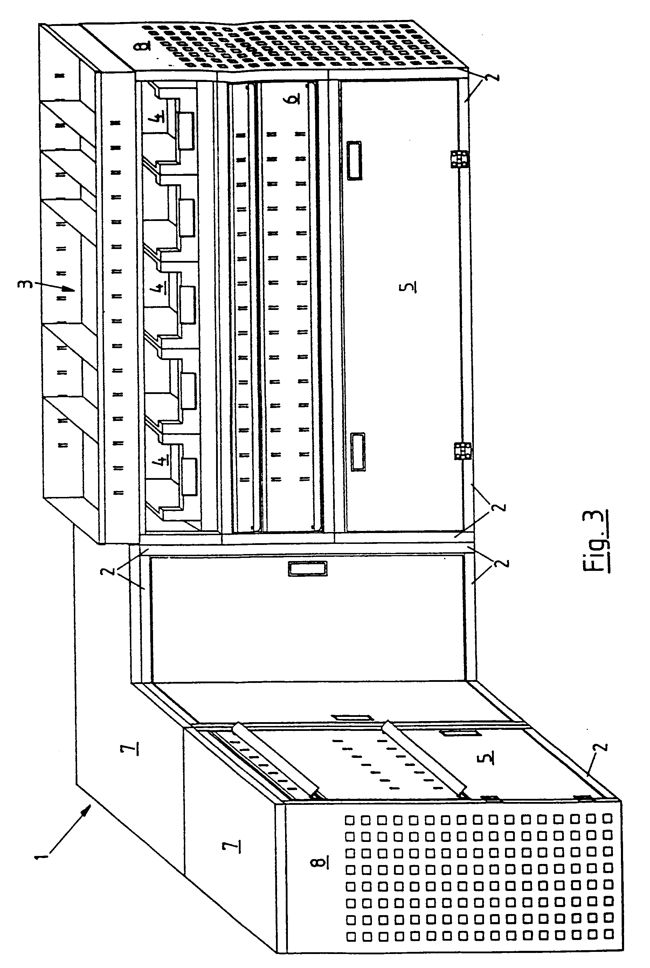

Bezugnehmend auf die Fig. 1 bis 3 sind drei Ausführungsbeispiele von Möbeln 1 dargestellt, die zum Einbau in Fahrzeuge vorgesehen sind. Die Befestigung im Fahrzeug kann hierbei auf bekannte und hier nicht dargestellte Art und Weise erfolgen.

Die Möbel 1 weisen einen Rahmen auf, der aus stranggepreßten Leichtmetallprofilen, die als Aluminiumprofile 2 ausgebildet sind, gefertigt ist.

Die einzelnen Aluminiumprofile 2 sind hierbei jeweils auf eine geeignete Länge zugeschnitten und mittels geeigneter Verbindungseinrichtungen, die später beschrieben werden sollen, miteinander verbunden, so daß ein stabiler, ein geringes Eigengewicht aufweisender und pflegeleichter Rahmen gebildet ist.

Die Möbel 1 können hierbei mit Elementen wie Aufsatzwannen 3, Sichtlagerkästen 4, Türen 5, Schubladen 6, Rolladen, Koffereinsätzen und anderen Elementen zur Lagerung von Werkzeugen und/oder Bauteilen versehen sein, die in nicht dargestellten Aufnahmeeinrichtungen gehalten sind, welche auf geeignete Art und Weise mit den Aluminiumprofilen 2 verbunden sind.

Desweiteren können auf den Oberseiten der Möbel 1 auch Arbeitsplatten 7 angebracht sein.

Die Möbel 1 können in Modulbauweise hergestellt sein, d.h. es können einzelne Bereiche des Möbels 1 mit bestimmten Elementen getrennt gefertigt und anschließend miteinander verbunden werden, genauso wie es auch möglich ist, mehrere getrennt gefertigte Möbel miteinander zu verbinden.

Die Zwischenräume bzw. Freiräume zwischen den Aluminiumprofilen sind mittels Verkleidungsgliedern verschlossen, welche in dem vorliegendem Ausführungsbeispiel als Kunststoffplatten 8 ausgebildet sind. Die Verkleidungsglieder 8 können hierbei selbstverständlich auch mit Bohrungen, Ausstanzungen oder Öffnungen versehen sein, um beispielsweise eine ausreichende Luftzirkulation in dem Möbel bzw. durch das Möbel zu ermöglichen.

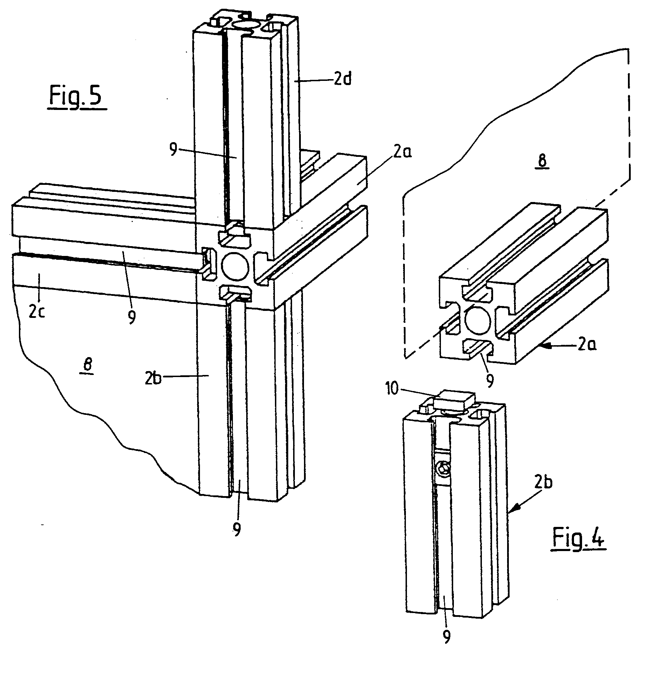

Die Verkleidungsglieder können, wie in der Fig. 4 schematisch dargestellt, in entsprechende Aussparungen bzw. Nuten 9 in den Aluminiumprofilen 2 eingesetzt sein, oder aber es kann auch vorgesehen sein, daß die Verkleidungsglieder 8 direkt auf den Aluminiumprofilen 2 festgenietet oder aber mit Kulissensteinen verschraubt werden, welche in den Aussparungen und/oder Nuten 9 der Aluminiumprofile 2 vorgesehen sind.

Fig. 4 zeigt schematisch eine Verbindung zwischen zwei Aluminiumprofilen 2a und 2b, wobei das Aluminiumprofil 2a in eine als überstehenden Zapfen 10 ausgebildete Verbindungseinrichtung einschiebbar ist und der Zapfen 10 über eine Stirnseite des Aluminiumprofiles 2b hinausragt, d.h. der Zapfen 10 wird formschlüssig in eine Aussparung bzw. Nut 9 des Aluminiumprofiles 2a eingesetzt und anschließend auf geeignete Art und Weise in dem Aluminiumprofil 2a festgeklemmt. Derartige Verbindungen sind aus der Praxis bekannt, weshalb hier nicht näher auf diese Verbindungen eingegangen werden soll.

Es ist selbstverständlich auch möglich, mehrere Aluminiumprofile 2 mittels nicht dargestellter Kulissensteine oder anderer Verbindungseinrichtungen miteinander zu verbinden.

Fig. 5 zeigt eine Verbindung von vier Aluminiumprofilen 2a, 2b, 2c, 2d, wodurch eine Ecke des Rahmens des Möbels realisiert ist.

Es ist selbstverständlich auch möglich, auf diese Art und Weise drei oder auch fünf Aluminiumprofile miteinander zu verbinden und somit auf einfache Art und Weise ein verhältnismäßig stabiles, ein geringes Eigengewicht aufweisendes und pflegeleichtes Möbel für Fahrzeugeinrichtungen zu realisieren.

## Patentansprüche

1. Möbel für Fahrzeugeinrichtungen, mit Schubladen, Koffereinsätzen, Türen, Rolladen, Regalen, Aufsätzen und dergleichen Elementen und mit einem Rahmen oder einem Gehäuse, in welches die Schubladen, Koffereinsätze, Türen, Rolladen, Regale, Aufsätze und dergleichen Elemente eingesetzt sind,
**dadurch gekennzeichnet,** daß
der Rahmen oder das Gehäuse aus stranggepreßten Leichtmetallprofilen (2) gebildet ist, wobei in die Zwischenräume zwischen den Leichtmetallprofilen (2) wenigstens teilweise Verkleidungsglieder (8) eingesetzt sind.

2. Möbel nach Anspruch 1,
**dadurch gekennzeichnet,** daß
die stranggepreßten Leichtmetallprofile (2) aus Aluminium oder einer Aluminiumlegierung gefertigt sind.

3. Möbel nach Anspruch 1,
**dadurch gekennzeichnet,** daß
die Verkleidungsglieder als Bleche und/oder Kunststoffplatten (8) ausgeführt sind.

4. Möbel nach Anspruch 1 oder 3,
**dadurch gekennzeichnet,** daß
die Verkleidungsglieder (8) in Aussparungen und/oder Nuten (9) in den Leichtmetallprofilen (2) eingesetzt sind.

5. Möbel nach Anspruch 1 oder 3,
**dadurch gekennzeichnet,** daß
die Verkleidungsglieder (8) außenseitig auf den Leichtmetallprofilen (2) angebracht sind.

6. Möbel nach Anspruch 4,
**dadurch gekennzeichnet,** daß
die Aussparungen und/oder Nuten (9) in Längsrichtung der Leichtmetallprofile (2) verlaufen.

7. Möbel nach einem der Ansprüche 1 bis 6,
**dadurch gekennzeichnet,** daß
die Leichtmetallprofile (2) eine wenigstens annähernd rechteckförmige Querschnittsfläche aufweisen, wobei die Aussparungen und/oder Nuten (9) auf allen vier Längsseiten der Leichtmetallprofile (2) vorgesehen sind.

8. Möbel nach einem der Ansprüche 1 bis 7,
**dadurch gekennzeichnet,** daß
die Leichtmetallprofile (2) mittels Verbindungseinrichtungen (10) an ihren Stirnseiten und/oder ihren Längsseiten miteinander verbindbar sind.

9. Möbel nach Anspruch 8,
**dadurch gekennzeichnet,** daß
die Verbindungseinrichtungen (10) als Kulissensteine ausgeführt sind.

10. Möbel nach Anspruch 8 oder 9,
**dadurch gekennzeichnet,** daß
die Verbindungseinrichtungen über Öffnungen in den Leichtmetallprofilen (2) in die Aussparungen und/oder Nuten (9) einführbar sind.

11. Möbel nach einem der Ansprüche 1 bis 10,
**dadurch gekennzeichnet,** daß
die Schubladen, Koffereinsätze, Türen, Rolladen, Regale, Aufsätze und dergleichen Elemente in Aufnahmeeinrichtungen gehalten sind, welche an den Leichtmetallprofilen (2) angebracht sind.

## Claims

1. Vehicle furniture, comprising drawers, box-type inserts, doors, roller shutters, shelves, attachments and similar elements and comprising a frame or a housing into which the drawers, box-type inserts, doors, roller shutters, shelves, attachments and similar elements are inserted, characterised in that the flame or housing is formed of extruded light metal profiles (2), panelling members (8) being inserted at least partially into the intermediate spaces between the light metal profiles (2).

2. Furniture according to claim 1, characterised in that the extruded light metal profiles (2) are made of aluminium or an aluminium alloy.

3. Furniture according to claim 1, characterised in that the panelling members are in the form of metal sheets and/or plastic sheets (8).

4. Furniture according to claim 1 or claim 3, characterised in that the panelling members (8) are inserted into recesses and/or grooves (9) in the light metal profiles (2).

5. Furniture according to claim 1 or claim 3, characterised in that the panelling members (8) are fitted to the exterior of the light metal profiles (2).

6. Furniture according to claim 4, characterised in that the recesses and/or grooves (9) extend in the longitudinal direction of the light metal profiles (2).

7. Furniture according to one of claims 1 to 6, characterised in that the light metal profiles (2) have an at least approximately rectangular cross sectional surface area, the recesses and/or grooves (9) being provided on all four longitudinal sides of the light metal profiles (2).

8. Furniture according to one of claims 1 to 7, characterised in that the light metal profiles (2) can be connected together at their end faces and/or their longitudinal sides by means of connecting means (10).

9. Furniture according to claim 8, characterised in that the connecting means (10) are in the form of sliding blocks.

10. Furniture according to claim 8 or claim 9, characterised in that the connecting means can be introduced into the recesses and/or grooves (9) via openings in the light metal profiles (2).

11. Furniture according to one of claims 1 to 10, characterised in that the drawers, box-type inserts, doors, roller shutters, shelves, attachments and similar elements are held in receiving means fitted to the light metal profiles (2).

## Revendications

1. Meuble pour l'équipement d'un véhicule comprenant des tiroirs, des éléments de coffres, des portes, des volets roulants, des étagères, des casiers et éléments similaires, ainsi qu'un cadre ou un châssis, dans lequel les tiroirs, éléments de coffres, portes, volets roulants, étagères, casiers et éléments similaires sont logés, caractérisé en ce que le cadre ou le châssis est constitué de profilés extrudés (2) en métal léger, des éléments d'habillage (8) étant insérés au moins partiellement dans les interstices entre les profilés (2) en métal léger.

2. Meuble selon la revendication 1, caractérisé en ce que les profilés extrudés (2) en métal léger sont réalisés en aluminium ou en un alliage d'aluminium.

3. Meuble selon la revendication 1, caractérisé en ce que les éléments d'habillage sont réalisés sous forme de tôles et/ou de plaque en matière plastique (8).

4. Meuble selon la revendication 1 ou 3, caractérisé en ce que les éléments d'habillage (8) sont insérés dans des évidements et/ou des rainures (9) ménagés dans les profilés (2) en métal léger.

5. Meuble selon la revendication 1 ou 3, caractérisé en ce que les éléments d'habillage (8) sont montés à l'extérieur sur les profilés (2) en métal léger.

6. Meuble selon la revendication 4, caractérisé en ce que les évidements et/ou les rainures (9) s'étende(nt) dans le sens longitudinal des profilés (2) en métal léger.

7. Meuble selon l'une quelconque des revendications 1 à 6, caractérisé en ce que les profilés (2) en métal léger présentent une surface de section au moins sensiblement rectangulaire, les évidements et/ou rainures (9) étant prévu(e)s sur chacune des quatre faces longitudinales des profilés (2) en métal léger.

8. Meuble selon l'une quelconque des revendications 1 à 7, caractérisé en ce que les profilés (2) en métal léger peuvent être reliés entre eux par des dispositifs de liaison (10) disposés sur leurs faces frontales et/ou longitudinales.

9. Meuble selon la revendication 8, caractérisé en ce que les dispositifs de liaison (10) sont réalisés sous la forme de coulisseaux.

10. Meuble selon la revendication 8 ou 9, caractérisé en ce que les dispositifs de liaison peuvent être introduits dans les évidements et/ou les rainures (9) par des ouvertures ménagées dans les profilés (2) en métal léger.

11. Meuble selon l'une quelconque des revendications 1 à 10, caractérisé en ce que les tiroirs, les éléments de coffres, les portes, les volets roulants, les étagères, les casiers et éléments similaires sont maintenus dans des dispositifs de réception montés sur les profilés (2) en métal léger.
